# FASCICULE DE BREVET EUROPEEN

(11) **EP 3 514 871 B1**
(45) Date de publication et mention de la délivrance du brevet: **12.08.2020**
(21) Numéro de dépôt: 19152189.7
(22) Date de dépôt: 16.01.2019
(51) Int. Cl.: H01M 4/86, C25B 11/04, C25B 1/10, C25B 9/10, H01M 4/88, C25B 11/03, C25B 9/08

(54) **DISPOSITIF D'ELECTROLYSE DE L'EAU POUR L'HOMOGENEISATION DE LA DENSITE DE COURANT**
WASSERELEKTROLYSEVORRICHTUNG ZUR HOMOGENISIERUNG DER STRÖMUNGSDICHTE
DEVICE FOR ELECTROLYSIS OF WATER FOR HOMOGENISING CURRENT DENSITY

(30) Priorité: 23.01.2018 FR 1850509
(43) Date de publication de la demande: 24.07.2019
(73) Titulaire: Commissariat à l'Énergie Atomique et aux Énergies Alternatives, 75015 Paris (FR)
(72) Inventeur: VERDIN, Baptiste, 71620 BEY (FR); FOUDA-ONANA, Frédéric, 97160 LE MOULE (FR)
(74) Mandataire: GIE Innovation Competence Group

(56) Documents cités:
- US-A1- 2008 264 780
- US-A1- 2017 044 678
- US-B2- 7 901 549

## Description

L'invention concerne les électrolyseurs pour la production de dihydrogène par électrolyse de l'eau, et en particulier les électrolyseurs munis de membranes échangeuses de protons.

Une cellule d'électrolyseur comprend un assemblage membrane/électrodes, avec la membrane échangeuse de protons munie d'une couche active anodique sur une face et d'une couche active cathodique sur l'autre face. De l'eau est introduite à l'anode. De l'oxygène est produit à l'anode par oxydation de l'eau et des protons sont libérés. Les protons traversent la membrane formant un électrolyte solide, et de l'hydrogène est produit à la cathode par réduction de protons.

Les matériaux anodiques doivent résister à des potentiels élevés. Par conséquent, le nombre de matériaux électrocatalytiques disponibles pour former une couche active anodique est relativement réduit. Les matériaux électrocatalytiques des couches anodiques sont ainsi généralement du IrO₂ ou des alliages de IrO₂X IrO₂Rt.

On a noté de fortes disparités de densités de courant dans différentes zones de l'assemblage membrane/électrodes, et ce même en essayant de maintenir une pression homogène sur toute la surface de l'assemblage membrane/électrodes et en essayant d'homogénéiser au maximum les propriétés électriques sur toute cette surface. On peut notamment constater un gradient de densité de courant entre le centre de l'anode et sa périphérie. Ce gradient de densité de courant augmente encore avec le vieillissement de l'électrolyseur. Un tel gradient est préjudiciable au fonctionnement de l'électrolyseur, en dissociant plusieurs régimes de fonctionnement différents en fonction des zones de l'anode. Une concentration de la densité de courant dans la partie centrale de l'anode induit en outre une dégradation prématurée du catalyseur, du fait d'une densité de courant supérieure à celle pour laquelle l'anode a été dimensionnée. Une trop faible densité de courant à la périphérie de l'anode peut au contraire induire une dégradation chimique de la membrane échangeuse de protons.

L'invention vise à résoudre un ou plusieurs de ces inconvénients. L'invention porte ainsi sur un dispositif d'électrolyse de l'eau, tel que défini dans les revendications annexées.

L'invention porte également sur les variantes des revendications dépendantes. L'homme du métier comprendra que chacune des caractéristiques des revendications dépendantes ou de la description peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe schématique d'un exemple de dispositif d'électrolyse incorporant un assemblage membrane-électrodes ;
- la figure 2 illustre une vue de face schématique d'un premier exemple de configuration d'une anode ;
- la figure 3 illustre une vue de face schématique d'un deuxième exemple de configuration d'une anode ;
- la figure 4 est une vue de face schématique d'une couche active anodique pour l'anode de la figure 2 ;
- les figures 5 et 6 illustrent la répartition du courant à travers une anode pour un dispositif d'électrolyse selon un exemple de mise en œuvre de l'invention, respectivement lors de sa mise en service et après une centaine d'heures d'utilisation ;
- la figure 7 est une vue en coupe schématique d'une structure pour un premier exemple d'élément de diffusion d'eau ;
- la figure 8 est une vue en coupe schématique d'une autre structure pour un deuxième exemple d'élément de diffusion d'eau.

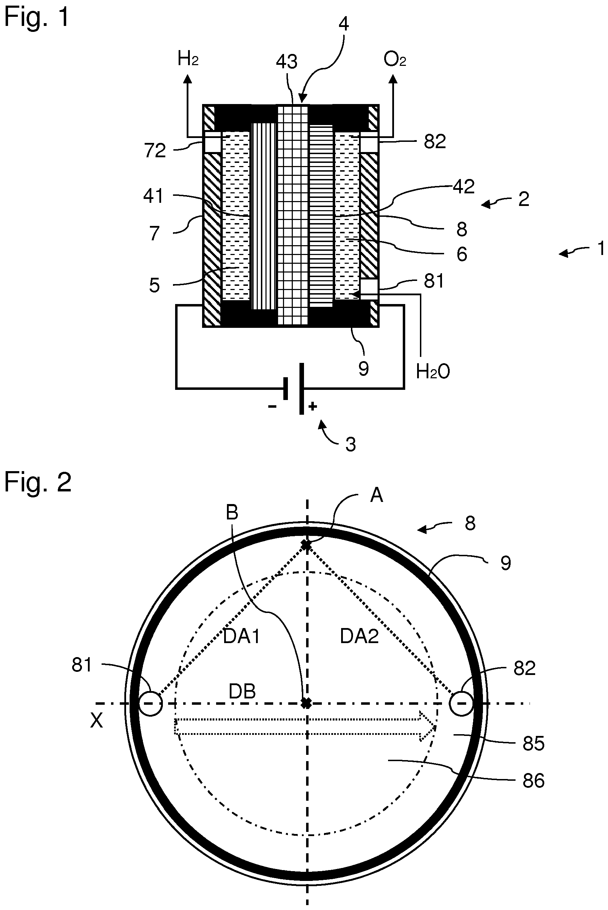

La figure 1 est une vue en coupe d'un exemple de dispositif d'électrolyse 1 de l'eau pour produire du dihydrogène. Le dispositif d'électrolyse 1 comprend une cellule électrochimique 2 et une alimentation électrique 3.

La cellule électrochimique 2 comprend un assemblage membrane-électrodes 4, des éléments de diffusion d'écoulement 5 et 6 disposés de part et d'autre de l'assemblage membrane/électrodes 4, et des plaques d'alimentation électrique 7 et 8. La plaque 7 forme une cathode et la plaque 8 forme une anode. Les éléments de diffusion d'écoulement 5 et 6 sont disposés respectivement entre l'assemblage membrane/électrodes 4 et la cathode 7, et entre l'autre assemblage membrane/électrodes 4 et l'anode 8. L'assemblage membrane/électrodes 4 comprend une membrane échangeuse de protons 43, ainsi qu'une couche active cathodique 41 et une couche active anodique 42 fixées de part et d'autre de cette membrane échangeuse de protons 43. La cathode 7 est positionnée en vis-à-vis de la couche active cathodique 41. L'anode 8 est positionnée en vis-à-vis de la couche active anodique 42.

Un collecteur 72 de sortie de dihydrogène est ménagé à travers une extrémité de la cathode 7 et débouche sur l'élément de diffusion 5. La cathode 7 présente un conduit d'évacuation de dihydrogène non illustré, en communication avec le collecteur 72.

Un collecteur d'entrée d'eau 81 est ménagé à travers une extrémité de l'anode 8 et débouche sur l'élément de diffusion 6. Un collecteur de sortie d'oxygène 82 est ménagé à travers une autre extrémité de la plaque 8 et débouche également sur l'élément de diffusion 6. La plaque d'alimentation 8 a également une fonction de guidage d'écoulement de fluide entre le collecteur 81 et le collecteur 82. Un conduit d'alimentation en eau non illustré est en communication avec le collecteur 81. Un conduit d'évacuation d'oxygène non illustré est en communication avec le collecteur 82. Un joint 9 est positionné entre l'anode 8 et l'assemblage membrane/électrodes 4, au niveau de la périphérie de l'anode 8. Le joint 9 est destiné à assurer l'étanchéité de l'écoulement entre les collecteurs 81 et 82.

Un premier exemple de configuration d'anode 8 est illustré en référence à la figure 2. L'anode 8 comporte ici une forme sensiblement circulaire. Une direction générale d'écoulement est ici illustrée par la droite X en tiret-point, reliant le collecteur 81 et le collecteur 82. Le sens d'écoulement entre les collecteurs 81 et 82 est ici illustré par la flèche en pointillés.

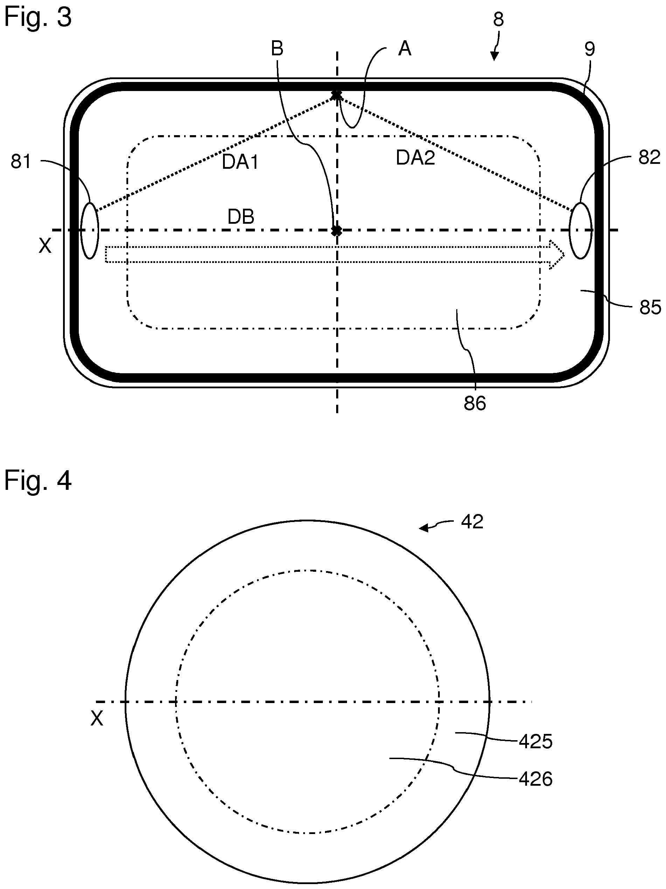

Un deuxième exemple de configuration d'anode 8 est illustré en référence à la figure 3. L'anode 8 comporte ici une forme sensiblement rectangulaire.

L'alimentation électrique 3 est configurée pour appliquer une tension continue généralement comprise entre 1,48 V et 3 V, avec une densité de courant au niveau des plaques d'alimentation comprise entre 500 et 40 000 A/m². Par application d'une telle tension, une réaction d'oxydation de l'eau au niveau de l'anode 8 produit du dioxygène, une réaction de réduction de protons au niveau de la cathode 7 produisant du dihydrogène.

La réaction à l'anode 8 est la suivante :

2H₂O_{→}4H⁺ + 4e⁻ + O₂

Les protons générés par la réaction anodique traversent la membrane échangeuse de protons 43 jusqu'à la cathode 7. L'alimentation 3 conduit les électrons générés par la réaction anodique jusqu'à la cathode 7.

La réaction à la cathode 7 est ainsi la suivante :

2H⁺ + 2e⁻ → H₂

La membrane échangeuse de protons 43 a pour fonction d'être traversée par des protons de la couche active anodique 42 vers la couche active cathodique 41, tout en bloquant les électrons ainsi que le dioxygène et le dihydrogène générés.

Comme illustré à la figure 2, l'anode 8 est plus large (la largeur est ici définie comme la dimension maximale de l'anode 8 selon une direction perpendiculaire à la direction d'écoulement X) que les collecteurs 81 et 82. Si on examine l'écoulement entre les collecteurs 81 et 82 en différents points selon la largeur (différents points dans une section selon une normale à la direction d'écoulement X), on constate que l'écoulement de fluide passant par ces différents points empreinte des trajets présentant des longueurs assez différentes. La perte de charge pour ces différents trajets peut présenter de fortes variations, du fait de la présence de l'eau dans ces écoulements. Ceci s'avère particulièrement marqué à mi distance entre les collecteurs 81 et 82.

Cette différence est illustrée à la figure 2 par les points A et B, positionnés sur un diamètre de l'anode 8 perpendiculaire à la droite X. Le point B est positionné sur une droite reliant les collecteurs 81 et 82. Le point A est positionné en périphérie de l'anode 8. On peut déterminer les distances respectives cumulées de ces points avec le collecteur 81 d'une part et le collecteur 82 d'autre part. Pour le point B, cette distance cumulée DB est égale à la distance entre les collecteurs 81 et 82. Pour le point A, cette distance cumulée DA est égale à la somme de la distance DA1 entre le point A et le collecteur 81 et de la distance DA2 entre le point A et le collecteur 82. La différence entre les distances DA et DB est au moins égale à 10 %, et est approximativement égale à 40 % dans l'exemple illustré. À la figure 3, on a également identifié un point A et un point B pour la configuration de l'anode 8 de forme sensiblement rectangulaire, avec également des différences entre les distances DA et DB.

Ces disparités de distances pour différents points de l'écoulement donnent lieu à de disparités de perte de charge, la perte de charge de l'écoulement passant par le point A étant supérieure à celle de l'écoulement passant par le point B. Ces différences de pertes de charges induisent des disparités de courant anodiques, pouvant notamment conduire à un vieillissement accéléré de certaines zones de la cellule électrochimique 2. L'invention s'avère particulièrement intéressante lorsqu'il existe une différence d'au moins 20 % entre les distances cumulées pour deux points d'une même section.

Afin d'homogénéiser la densité de courant à travers l'anode 8 dans différentes zones, l'invention propose de réaliser un chargement de la couche active anodique 42 en matériau électrocatalytique supérieur d'au moins 10% pour un point en vis-à-vis de la périphérie de l'anode 8 par rapport à un point positionné sur la droite X, ces deux points étant positionnés dans une même section de l'anode normale à la droite X.

Ainsi, dans l'exemple de la figure 2, le chargement en matériau électrocatalytique de la couche active anodique 42 en vis-à-vis du point A est au moins 10 % supérieur à son chargement en vis-à-vis du point B. En accroissant le chargement en matériau électrocatalytique dans une zone dans laquelle le flux d'écoulement est plus faible, on arrive à homogénéiser la densité de courant sur l'ensemble de la surface de l'anode 8.

Dans l'exemple, on a par exemple différencié une zone périphérique 85 de l'anode 8 par rapport à une zone médiane 86. La frontière entre les zones 85 et 86 est ici illustrée par un cercle en tiret point. La figure 4 est une vue de face schématique de la couche active 42. La couche active 42 présente ainsi une zone périphérique 425 superposée à la zone 85, et une zone médiane 426 superposée à la zone 86.

Le chargement surfacique en matériau électrocatalytique de la couche active anodique dans la zone 426 est au moins 10 % supérieur à son chargement surfacique dans la zone 425. Dans l'exemple illustré, le chargement surfacique en matériau électrocatalytique est homogène dans la zone 425 de la couche active 42. Le chargement surfacique en matériau électrocatalytique est également homogène dans la zone 426. La zone 426 peut par exemple être réalisée sur une bande de largeur continue en partant de la périphérie de la couche active 42. La zone 426 peut par exemple être dimensionnée de façon à former au moins 20 %, de préférence au moins 35 % de la surface de la couche active 42.

On peut également envisager de réaliser la couche active 42 avec une zone médiane en forme de disque, une zone périphérique en forme de bande, et une zone intermédiaire en forme de bande, disposée entre le disque et la bande périphérique. On peut ainsi mieux différencier différentes zones de fonctionnement de la couche active 42, avec des chargements surfaciques en matériau électrocatalytique différents. Les limites de la bande périphérique et de la bande intermédiaire peuvent être définies par une distance depuis la bordure périphérique de la couche active 42.

La réalisation de l'assemblage membrane/électrodes 4 avec une couche active anodique 42 présentant des zones avec des chargements électrocatalytiques différents peut aisément être mise en œuvre au moyen d'une imprimante à jet d'encre pulvérisée. Une telle imprimante peut alors être utilisée pour déposer une quantité différente d'encre en différents emplacements d'une face de la membrane 43, avec une encre incluant le matériau électrocatalytique en solution dans un ionomère. La quantité d'encre peut par exemple être adaptée en modulant le débit d'encre dans différentes zones ou en utilisant un même débit mais en différenciant le nombre de couches déposées en superposition par la tête d'impression pour différentes zones. Un tel procédé permet donc aisément de moduler le chargement surfacique en matériau électrocatalytique de la couche 42. Par un tel procédé, les différences d'épaisseur pour les différentes zones de la couche 42 sont négligeables et n'altèrent pas le fonctionnement de la cellule 2.

Le matériau électro catalytique de la couche active anodique 42 peut par exemple être avantageusement du IrO₂ ou des alliages de IrO₂X (X= Ru, Sn). Le matériau électrocatalytique de la couche active anodique 42 inclut avantageusement l'un de ces matériaux à plus de 50 % en masse dans l'extrait sec de la couche catalytique. Le chargement surfacique moyen de la couche active anodique 42 en un tel matériau électrocatalytique peut par exemple être compris entre 1 et 3mg/cm², de préférence entre 1,7 et 2,1 mg/cm². Ainsi, avec un tel chargement, on obtiendrait des performances similaires à celles de l'état de la technique avec un vieillissement réduit et un coût en matériau électrocatalytique également réduit.

De façon connue en soi, le matériau électrocatalytique de la couche anodique 42 peut être enrobé dans une matrice en matériau polymère, par exemple un ionomère tel qu'un fluoropolymère basé sur du tetrafluoroéthylene sulfoné.

On peut également envisager que le matériau électrocatalytique de la couche 42 soit fixé sur un support tel que de l'oxyde d'étain dopé à l'antimoine (ATO).

Avantageusement, la couche active anodique 42 est dépourvue de support carboné.

La membrane échangeuse de protons 43 peut par exemple être réalisée avec une épaisseur au moins égale à 100 µm. La membrane 43 peut par exemple être réalisée en un ionomère commercialisé sous la dénomination commerciale Nafion.

Des tests concluants ont notamment été réalisés avec différentes conceptions de couches actives anodiques 42, pour une couche 42 et une anode 8 circulaires.

Par exemple, un premier type de couche 42 a été intégré dans un assemblage membrane/électrodes 4 avec les paramètres suivants :
- un chargement surfacique moyen de la couche 42 en IrO₂ de 1,795 mg/cm²;
- une bande périphérique de la couche 42 présentant un chargement surfacique moyen en IrO₂ de 1,98 mg/cm² ;
- un disque médian de la couche 42 présentant un chargement surfacique moyen en IrO₂ de 1,25 mg/cm² ;
- une bande intermédiaire de la couche 42, positionnée entre la bande périphérique et le disque médian, présentant un chargement surfacique moyen en IrO₂ de 1,56 mg/cm² ;
- une répartition de matériau électrocatalytique de 30 % sur la bande périphérique, de 62 % sur la bande intermédiaire, et de 8 % sur le disque médian ;
- une couche active cathodique 41 incluant un chargement surfacique moyen en Pt sur un support carboné de 0,8 mg/cm².

Selon un autre exemple, un deuxième type de couche 42 a été intégré dans un assemblage membrane/électrodes 4 avec les paramètres suivants :
- un chargement surfacique moyen de la couche 42 en IrO₂ de 2,046 mg/cm²;
- une bande périphérique de la couche 42 présentant un chargement surfacique moyen en IrO₂ de 2,5 mg/cm² ;
- un disque médian de la couche 42 présentant un chargement surfacique moyen en IrO₂ de 1,4 mg/cm² ;
- une bande intermédiaire de la couche 42, positionnée entre la bande périphérique et le disque médian, présentant un chargement surfacique moyen en IrO₂ de 1,87 mg/cm² ;
- une répartition de matériau électrocatalytique de 30 % sur la bande périphérique, de 62 % sur la bande intermédiaire, et de 8 % sur le disque médian ;
- une couche active cathodique 41 incluant un chargement surfacique moyen en Pt sur un support carboné de 0,8 mg/cm².

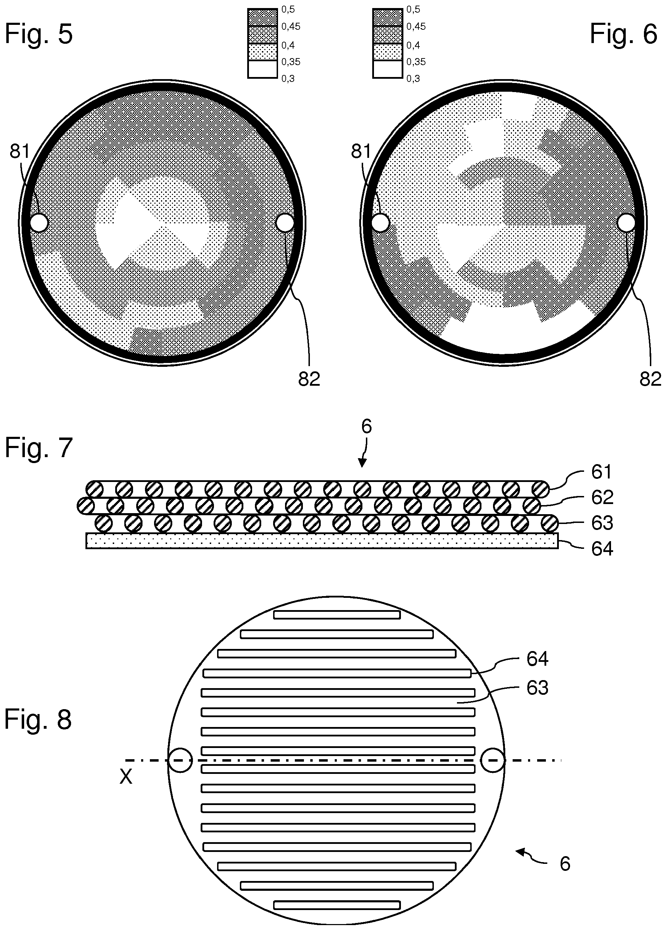

Les figures 5 et 6 illustrent la répartition du courant à travers une anode 8 associée à une couche active 42 selon le deuxième type, respectivement lors de sa mise en service et après une centaine d'heures d'utilisation. On illustre ici différentes gammes de densité de courant en A/cm².

On peut noter que l'invention a permis d'obtenir une densité de courant relativement homogène pour les différentes zones, à savoir la zone médiane, la bande intermédiaire et la bande périphérique. On peut donc supposer que le vieillissement des différentes zones de l'assemblage membrane/électrodes sera également homogène. L'invention permet notamment d'éviter la concentration du courant dans la zone médiane. L'invention permet également d'accroître la densité de courant pour la zone périphérique, ce qui permet de tirer parti d'une zone de la couche active 42 formant la majeure partie de sa surface mais étant usuellement moins performante du fait des pertes de charge que l'écoulement de fluide subit pour la rejoindre. La densité de courant moyenne à la mise en service s'est élevée à 0,405 A/cm².

Après vieillissement, on constate que l'homogénéité de la répartition de la densité de courant à 0.397 A/cm² n'est pas altérée. Ce qui démontre l'intérêt de la structuration de la couche active pour minimiser les phénomènes de dégradation de l'assemblage membrane-électrode (AME).

La cellule électrochimique 2 comprend avantageusement un élément de diffusion d'écoulement 6 disposé entre l'assemblage membrane/électrodes 4 et l'anode 8.

La figure 7 est une vue en coupe schématique d'une structure pour un premier exemple d'élément de diffusion d'eau 6. L'élément de diffusion d'eau 6 comprend ici une superposition de plusieurs grilles 61 à 63 et d'une couche poreuse 64. La couche poreuse 64 est positionnée en contact avec la couche 42, la grille 61 étant placée en contact avec l'anode 8. Dans cet exemple, on a superposé trois grilles 61 à 63. Les grilles 61 à 63 présentent des mailles relativement larges, avec une largeur au moins égale à 1 mm. Les grilles 61 à 63 ont pour rôle de répartir l'eau dans le volume. La couche poreuse 64 peut par exemple présenter des pores d'une dimension comprise entre 10 et 50 µm, avec une porosité comprise entre 30 et 50 %. La couche poreuse 64 est destinée à permettre une répartition fine de l'eau vers la couche 42. La couche poreuse 64 est en outre destinée à évacuer les gaz produits, et permettre un contact électrique le plus homogène possible. On peut également envisager de superposer plusieurs couches poreuses 64 avec des porosités différentes, afin de créer un gradient de porosité. Les grilles 61 à 63 et la couche poreuse 64 sont conductrices électriquement. L'épaisseur de cet élément de diffusion d'eau 6 peut par exemple être comprise entre 1 et 3 mm.

La figure 8 est une vue en coupe schématique d'une autre structure pour un deuxième exemple d'élément de diffusion d'eau 6. L'élément de diffusion d'eau 6 est ici sous la forme d'un guide d'écoulement d'eau. L'élément 6 est formé d'un seul tenant. L'élément 6 comporte des parois 64, délimitant des canaux d'écoulement 63. Les canaux d'écoulement 63 sont parallèles à la droite X, et permettent ainsi de guider un écoulement de fluide du collecteur 81 vers le collecteur 82. La profondeur des canaux d'écoulement 63 est par exemple comprise entre 1 et 3 mm.

## Revendications

1. Dispositif d'électrolyse de l'eau (1), comportant :
- un assemblage membrane/électrodes (4), comprenant une membrane échangeuse de protons (43) et une couche active anodique (42) incluant un matériau électrocatalytique et disposée sur une face de ladite membrane échangeuse de protons (43) ;
- un collecteur d'entrée d'eau (81) ;
- un collecteur de sortie d'oxygène (82), une droite (X) reliant le collecteur d'entrée d'eau (81) au collecteur de sortie d'oxygène (82) s'étendant selon une direction générale d'écoulement ;
- une anode (8) en vis-à-vis de la couche active anodique (42), présentant une extrémité en communication avec le collecteur d'entrée d'eau (81) et une autre extrémité en communication avec le collecteur de sortie d'oxygène (82) ;
- **caractérisé en ce que** :
- dans une section selon une normale à ladite droite (X), l'anode (8) présente des points (A, B) ayant chacun une distance cumulée avec le collecteur d'entrée d'eau (81) et avec le collecteur de sortie d'oxygène (82), la distance cumulée pour un premier point (A) en périphérie de l'anode (8) étant supérieure d'au moins 10% à la distance cumulée d'un deuxième point (B) positionné sur ladite droite (X) ;
- le chargement surfacique de la couche active anodique (42) en matériau électrocatalytique au niveau du premier point étant au moins 10% supérieure à son chargement surfacique au niveau du deuxième point.

2. Dispositif (1) selon la revendication 1, dans lequel le matériau électrocatalytique de la couche active anodique (42) inclut de l'IrO₂ à plus de 50 % en masse dans l'extrait sec de cette couche active anodique.

3. Dispositif (1) selon la revendication 1, dans lequel le matériau électrocatalytique de la couche active anodique (42) inclut de IrO₂X avec X= Ru ou Sn, à plus de 50 % en masse dans l'extrait sec de cette couche active anodique.

4. Dispositif (1) selon la revendication 2 ou 3, dans lequel ladite couche active anodique (42) inclut un chargement surfacique moyen d'IrO₂ compris entre 1 et 3mg/cm².

5. Dispositif (1) selon l'une quelconque des revendications précédentes, dans lequel ladite membrane échangeuse de protons (43) présente une épaisseur au moins égale à 100 µm.

6. Dispositif (1) selon l'une quelconque des revendications précédentes, dans lequel la distance cumulée pour le premier point (A) est supérieure d'au moins 20 % à la distance cumulée pour le deuxième point (B).

7. Dispositif (1) selon l'une quelconque des revendications précédentes, dans lequel l'anode (8) présente une forme circulaire.

8. Dispositif (1) selon l'une quelconque des revendications précédentes, dans lequel ladite couche active anodique (42) inclut une matrice en matériau polymère dans lequel le matériau électrocatalytique est enrobé.

9. Dispositif (1) selon l'une quelconque des revendications précédentes, comprenant en outre un élément perméable (6) de diffusion d'eau positionné entre la couche active anodique (42) et l'anode (8).

10. Dispositif (1) selon la revendication 9, dans lequel ledit élément perméable (6) comprend un empilement de plusieurs grilles et d'une couche poreuse.

11. Dispositif (1) selon l'une quelconque des revendications 1 à 8, comprenant un guide d'écoulement disposé entre l'anode (8) et la couche active anodique (42), le guide d'écoulement définissant des canaux d'écoulement entre le collecteur d'entrée d'eau (81) et le collecteur de sortie d'oxygène (82).

12. Dispositif (1) selon l'une quelconque des revendications précédentes, dans lequel ladite couche active anodique (42) est dépourvue de support carboné.

13. Dispositif (1) selon l'une quelconque des revendications précédentes, comprenant en outre :
- une couche active cathodique (41) disposée sur une face de ladite membrane échangeuse de protons (43) opposée à la couche active anodique (42) ;
- une cathode (7) en vis-à-vis de la couche active cathodique (41), la cathode et l'anode étant conductrices électriquement ;
- un circuit d'alimentation (3) configuré pour appliquer une différence de potentiel entre l'anode et la cathode.

## Patentansprüche

1. Wasserelektrolysevorrichtung (1), aufweisend:
- eine Membran-Elektroden-Anordnung (4), umfassend eine Protonenaustauschmembran (43) und eine anodische Aktivschicht (42), die ein elektrokatalytisches Material enthält und auf einer Seite der Protonenaustauschmembran (43) angeordnet ist;
- einen Wassereinlasssammler (81);
- einen Sauerstoffauslasssammler (82), eine Gerade (X), die den Wassereinlasssammler (81) mit dem Sauerstoffauslasssammler (82) verbindet, die sich entlang einer allgemeinen Strömungsrichtung erstreckt;
- eine Anode (8) gegenüber der anodischen Aktivschicht (42) mit einem Ende, das mit dem Wassereinlasssammler (81) in Verbindung steht, und einem anderen Ende, das mit dem Sauerstoffauslasssammler (82) in Verbindung steht;
- **dadurch gekennzeichnet, dass**:
- in einem Abschnitt entlang einer Normalen zu der Geraden (X) die Anode (8) Punkte (A, B) aufweist, die jeweils einen kumulierten Abstand zu dem Wassereinlasssammler (81) und zu dem Sauerstoffauslasssammler (82) aufweisen, wobei der kumulierte Abstand für einen ersten Punkt (A) am Rand der Anode (8) um mindestens 10 % größer als der kumulierte Abstand eines zweiten Punkts (B) ist, der auf der Geraden (X) positioniert ist;
- wobei die Oberflächenaufladung der anodischen Aktivschicht (42) mit elektrokatalytischem Material an dem ersten Punkt um mindestens 10 % größer als ihre Oberflächenaufladung an dem zweiten Punkt ist.

2. Vorrichtung (1) nach Anspruch 1, wobei das elektrokatalytische Material der anodischen Aktivschicht (42) zu mehr als 50 Massen-% IrO₂ im Trockenauszug dieser anodischen Aktivschicht enthält.

3. Vorrichtung (1) nach Anspruch 1, wobei das elektrokatalytische Material der anodischen Aktivschicht (42) zu mehr als 50 Massen-% IrO₂X, wobei X = Ru oder Sn, im Trockenauszug dieser anodischen Aktivschicht enthält.

4. Vorrichtung (1) nach Anspruch 2 oder 3, wobei die anodische Aktivschicht (42) eine mittlere Oberflächenaufladung mit IrO₂ zwischen 1 und 3 mg/cm² aufweist.

5. Vorrichtung (1) nach einem der vorhergehenden Ansprüche, wobei die Protonenaustauschmembran (43) eine Dicke von mindestens gleich 100 µm aufweist.

6. Vorrichtung (1) nach einem der vorhergehenden Ansprüche, wobei der kumulierte Abstand für den ersten Punkt (A) um mindestens 20 % größer als der kumulierte Abstand für den zweiten Punkt (B) ist.

7. Vorrichtung (1) nach einem der vorhergehenden Ansprüche, wobei die Anode (8) eine Kreisform aufweist.

8. Vorrichtung (1) nach einem der vorhergehenden Ansprüche, wobei die anodische Aktivschicht (42) eine Matrix aus Polymermaterial aufweist, in welche das elektrokatalytische Material eingebettet ist.

9. Vorrichtung (1) nach einem der vorhergehenden Ansprüche, ferner umfassend ein durchlässiges Wasserdiffusionselement (6), das zwischen der anodischen Aktivschicht (42) und der Anode (8) positioniert ist.

10. Vorrichtung (1) nach Anspruch 9, wobei das durchlässige Element (6) einen Stapel aus mehreren Gittern und einer porösen Schicht umfasst.

11. Vorrichtung (1) nach einem der Ansprüche 1 bis 8, umfassend eine Durchflussführung, die zwischen der Anode (8) und der anodischen Aktivschicht (42) angeordnet ist, wobei die Durchflussführung Durchflusskanäle zwischen dem Wassereinlasssammler (81) und dem Sauerstoffauslasssammler (82) definiert.

12. Vorrichtung (1) nach einem der vorhergehenden Ansprüche, wobei die anodische Aktivschicht (42) keinen Kohlenstoffträger aufweist.

13. Vorrichtung (1) nach einem der vorhergehenden Ansprüche, ferner umfassend:
- eine kathodische Aktivschicht (41), die auf einer Seite der Protonenaustauschmembran (43) angeordnet ist, die der anodischen Aktivschicht (42) gegenüberliegt;
- eine Kathode (7) gegenüber der kathodischen Aktivschicht (41), wobei die Kathode und Anode elektrisch leitend sind;
- einen Stromversorgungskreis (3), der dazu ausgebildet ist, eine Potentialdifferenz zwischen der Anode und der Kathode anzulegen.

## Claims

1. Water electrolysis device (1), comprising:
- a membrane-electrode assembly (4), comprising a proton-exchange membrane (43) and an anode active layer (42) that includes an electrocatalytic material and is positioned on one face of said proton-exchange membrane (43);
- a water inlet collector (81);
- an oxygen outlet collector (82), a straight line (X) connecting the water inlet collector (81) to the oxygen outlet collector (82) extending along a general flow direction;
- an anode (8) facing the anode active layer (42), having one end in communication with the water inlet collector (81) and another end in communication with the oxygen outlet collector (82);
- **characterized in that**:
- in a section along a normal to said straight line (X), the anode (8) has points (A, B) that each have a combined distance with the water inlet collector (81) and with the oxygen outlet collector (82), the combined distance for a first point (A) at the periphery of the anode (8) being at least 10% greater than the combined distance of a second point (B) positioned on said straight line (X);
- the surface loading of the anode active layer (42) with electrocatalytic material at the first point being at least 10% greater than the surface loading thereof at the second point.

2. Device (1) according to Claim 1, in which the electrocatalytic material of the anode active layer (42) includes IrO₂ at more than 50% by weight in the solids content of this anode active layer.

3. Device (1) according to Claim 1, in which the electrocatalytic material of the anode active layer (42) includes IrO₂X with X= Ru or Sn, at more than 50% by weight in the solids content of this anode active layer.

4. Device (1) according to Claim 2 or 3, in which said anode active layer (42) includes a mean surface loading of IrO₂ of between 1 and 3 mg/cm².

5. Device (1) according to any one of the preceding claims, in which said proton-exchange membrane (43) has a thickness at least equal to 100 µm.

6. Device (1) according to any one of the preceding claims, in which the combined distance for the first point (A) is at least 20% greater than the combined distance for the second point (B).

7. Device (1) according to any one of the preceding claims, in which the anode (8) has a circular shape.

8. Device (1) according to any one of the preceding claims, in which said anode active layer (42) includes a polymer matrix in which the electrocatalytic material is coated.

9. Device (1) according to any one of the preceding claims, further comprising a permeable water diffusion element (6) positioned between the anode active layer (42) and the anode (8).

10. Device (1) according to Claim 9, in which said permeable element (6) comprises a stack of several screens and of a porous layer.

11. Device (1) according to any one of Claims 1 to 8, comprising a flow guide positioned between the anode (8) and the anode active layer (42), the flow guide defining flow channels between the water inlet collector (81) and the oxygen outlet collector (82).

12. Device (1) according to any one of the preceding claims, in which said anode active layer (42) is devoid of a carbon-based support.

13. Device (1) according to any one of the preceding claims, further comprising:
- a cathode active layer (41) positioned on one face of said proton-exchange membrane (43) on the opposite side to the anode active layer (42);
- a cathode (7) facing the cathode active layer (41), the cathode and the anode being electrically conductive;
- a power supply circuit (3) configured to apply a potential difference between the anode and the cathode.
